# EUROPÄISCHE PATENTANMELDUNG

(11) **EP 2 554 892 A1**
(43) Veröffentlichungstag der Anmeldung: **06.02.2013**
(21) Anmeldenummer: 11006369.0
(22) Anmeldetag: 03.08.2011
(51) Int. Cl.: F16N 7/38, F16N 13/16

(54) **Druckmittelwandler**

(71) Anmelder: Delimon GmbH, 40227 Düsseldorf (DE)
(72) Erfinder: Gaunitz, Wolfgang, 41469 Neuss (DE); Jungverdorben, Bernd, 47929 Gretrath (DE)
(74) Vertreter: Stenger, Watzke & Ring

(57) **Zusammenfassung**

Um eine Einrichtung zur Rückführung von verbrauchten Schmierstoffen der gattungsgemäßen Art dahingehend zu verbessern, dass diese eine längere Standzeit aufweist, unanfälliger gegen äußere Einflüsse ist und einen sichereren Betrieb gewährleistet wird mit der Erfindung eine Einrichtung zur Rückführung von verbrauchten Schmierstoffen von Verbrauchern zu einer Sammelstelle vorgeschlagen, wobei einem Verbraucher ein Pumpenelement zur Aufnahme und Weiterleitung von Überschussschmierstoff zugeordnet ist, welches einen gegen die Wirkung einer Rückstellfeder antreibbaren Kolben mit wenigstens einen Druckmittelwandler, der einen einseitig mit dem Schmierstoffdruck beaufschlagbaren Kolben aufweist, der andererseits einen Öldruck zum Antrieb des Kolbens des Pumpenelementes steuert.

## Beschreibung

Die vorliegende Erfindung betrifft eine Einrichtung zur Rückführung von verbrauchten Schmierstoffen von Verbrauchern zu einer Sammelstelle, wobei einem Verbraucher ein Pumpenelement zur Aufnahme und Weiterleitung von Überschussschmierstoff zugeordnet ist, welches einen gegen die Wirkung einer Rückstellfeder antreibbaren Kolben aufweist.

Eine gattungsgemäße Einrichtung ist aus der EP 0 715 118 bekannt. Diese offenbart, dem Verbraucher in der Rückführungsleitung ein Pumpenelement nachzuordnen, welches bei Betätigung Überschussschmierstoff vom Verbraucher absaugt und anschließend in Richtung der Sammelstelle herausdrückt. Dabei wird davon ausgegangen, dass das Pumpenelement einen axial beweglichen Kolben aufweist, der gegen die Kraft einer Rückstellfeder direkt vom Schmiermittel selbst angetrieben wird.

Diese vorbekannte Lösung hat den Nachteil, dass das Pumpenelement auch antriebsseitig mit dem Schmierstoff und dem Hauptschmierstoffdruck beaufschlagt ist. Da je nach Anlage die Schmierung entsprechender Verbraucher oder Verbraucherstellen, beispielsweise Lager und dergleichen, zum Teil in sehr langen Perioden erfolgt, stehen derartige Kolben sehr lange in einer vorgegebenen Position. Insbesondere in Abhängigkeit von der Außentemperatur bewirkt somit die Viskosität des Schmierstoffes, dass es leicht zu Störungen auf der Absaugseite kommt. Dies wiederum kann zu großen Überschussschmierstoffmengen beim Verbraucher führen. Wenn dieser, wie von der EP 0 715 118 ebenfalls vorgeschlagen, noch gegen Schmierstoffdurchtritt abgedichtet ist, kann es hier sogar zu Beschädigungen kommen.

Darüber hinaus erfordern entsprechende Anlagen eine häufige und umfangreiche Wartung, um beispielsweise verharzte Schmierstoffreste aus den Pumpen antriebsseitig zu entfernen, Kolben zu lösen und dergleichen.

Ausgehend von diesem Stand der Technik liegt der vorliegenden Erfindung die **Aufgabe** zugrunde, eine Einrichtung zur Rückführung von verbrauchten Schmierstoffen der gattungsgemäßen Art dahingehend zu verbessern, dass diese eine längere Standzeit aufweist, unanfälliger gegen äußere Einflüsse ist und einen sichereren Betrieb gewährleistet.

Zur technischen **Lösung** wird eine Einrichtung zur Rückführung von Überschussschmierstoffen mit den Merkmalen des Anspruches 1 vorgeschlagen. Weiter Vorteile und Merkmale der Erfindung ergeben sich aus den Unteransprüchen.

Gemäß der Erfindung wird ein in sich geschlossener Antriebskreislauf zum Antrieb der Pumpenelemente ausgebildet, der als Antriebsmedium ein im Vergleich zum Schmierstoff weniger viskoses Öl verwendet. Der Kreislauf ist an sich geschlossen und wird von einem Kolben gesteuert, der seinerseits in einem erfindungsgemäßen Druckmittelwandler mit dem Druck des Schmierstoffes in der Hauptversorgungsleitung beaufschlagt ist.

Auf diese Weise wird der Antriebskreislauf der Pumpenelemente von dem eigentlichen Schmierstoffkreislauf entkoppelt. Durch das verwendete Öl entfallen die Anfälligkeiten der Pumpenelemente, der Ventile, Leitungen und Kolben durch in Folge langer Standzeiten, niedriger Temperaturen und dergleichen verharzenden oder verhärtenden Schmierstoffe. Darüber hinaus kann auch auf Überhitzungen und dergleichen durch entsprechende Sicherheitsventile reagiert werden. So kann ein etwaiger Luftüberdruck, z. B. durch Erwärmung im Lager, abgeblasen werden, wenn das Sicherheitsventil in der Fett-Absaugseite angeordnete ist. Weiterhin werden durch die Entkopplung die Verlege- und Anschlussmöglichkeiten derartiger Systeme erheblich verbessert, weil mit dem Steuerbeziehungsweise Antriebsölkreislauf auch größere Strecken überwunden werden können.

Der erfindungsgemäße Druckmittelwandler ist gemäß einem Vorschlag der Erfindung zylinderförmig ausgebildet. Auf einer Seite des Zylinders ist die Schmierstoffleitung angeschlossen, so dass hier der jeweilige Schmierstoffdruck anliegt. Auf der anderen Seite des Zylinders ist der Ölkreislauf zum Antrieb der Pumpenelemente angeschlossen.

Im Zylinder ist ein axial beweglicher Kolben angeordnet, der somit den Schmiermitteldruck auf den Antriebsöldruck überträgt. Durch diese Konstruktion ist es auch möglich, den Antriebsdruck an die Bauelemente anzupassen. Es ist im Rahmen der Erfindung auch möglich, auf den Antriebsdruck unabhängig vom Druckmittelwandler Einfluss zu nehmen. So könnte ein zusätzlicher Steuerkolben, der auf jede beliebige Weise angesteuert sein kann, verwendet werden, um auch zwischen den Schmierphasen Überschussschmierstoff abzusaugen und/oder weiterzuleiten. So ist es auch möglich, in die Pumpenkammer eingesaugtes Überschussfett zu entleeren, obwohl kein Schmierstoffdruck aufgebracht und damit eine Schmierung durchgeführt wird.

Mit der Erfindung wird eine Lösung bereitgestellt, mit welcher entsprechende Einrichtungen auf wirtschaftliche Weise erheblich verbessert werden. Insbesondere werden die Standzeiten erhöht und die Wartungsintervalle verringert. Auch lässt sich die Effektivität steigern.

Gemäß einem Vorschlag der Erfindung besteht das Pumpenelement und/oder der Druckmittelwandler aus einem Stahlgehäuse mit seewassergeschützter Oberfläche. Somit eignen sich die Anlagenelemente auch für den Einsatz beispielsweise von Offshore-Windkraftanlagen. Durch die Entkopplung beider Systeme kann der Entsorgungsdruck unabhängig vom Arbeitsdruck des Schmiersystems eingestellt sein. Bei Arbeitsdrücken von 150 oder 200 bar können beispielsweise Entsorgungsdrücke zwischen 100 und 200 bar eingestellt werden.

Weitere Vorteile und Merkmale der Erfindung ergeben sich aus der folgenden Beschreibung anhand der Figuren. Dabei zeigen:
- Fig. 1: eine schematische Darstellung eines Ausführungsbeispiels einer Anlage und
- Fig. 2: eine teilgeschnittene Darstellung eines Ausführungsbeispiels für einen Druckmittelwandler.

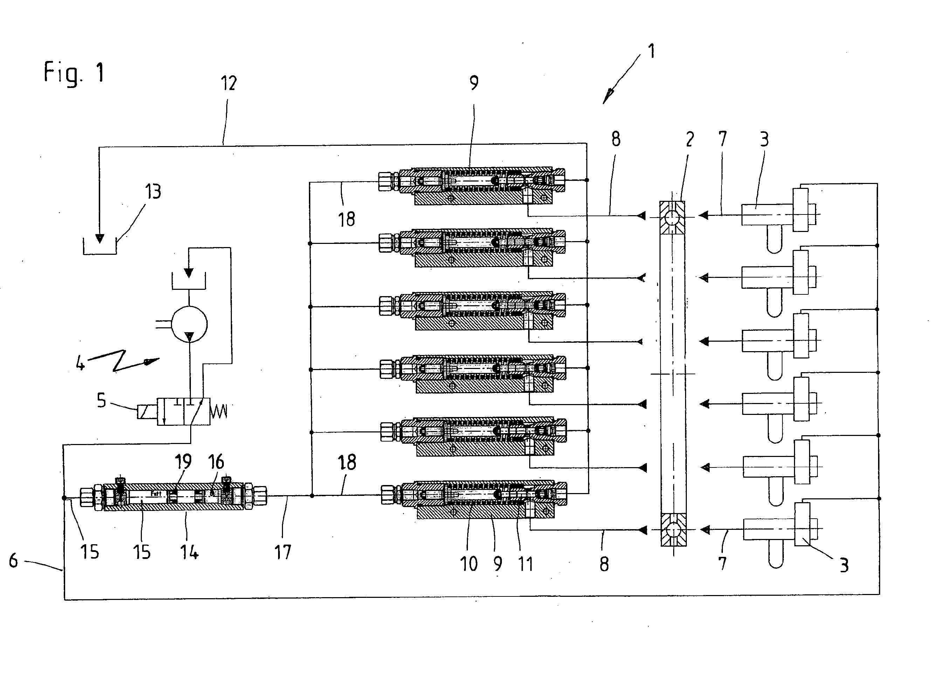

Eine erfindungsgemäße Einrichtung 1 ist gemäß Fig. 1 im Bereich eines beispielhaft aufgeführten Wellenlagers 2 gezeigt. Über eine Vielzahl von Ausgabeelementen 3 wird Schmiermittel an unterschiedliche gewünschte Lagerstellen des Wellenlagers 2 ausgebracht. Das Schmiermittel stammt auch einer Schmiermittelquelle 4, die über ein Ventil 5 auf eine Schmiermittelleitung 6 zu den Ausgabestellen 3 geführt wird. Zu diesem Zweck wird ein entsprechender Druck aufgebaut.

Das Schmiermittel wird dann an unterschiedlichen Schmiermittelstellen 7 ausgebracht.

Überschüssiges Schmiermittel wird an den entsprechenden Stellen 8 aufgenommen und über eine Leitung einer Schmiermittelpumpe 9 zugeführt. Gegen die Vorspannung einer Feder 10 wird ein Kolben 11 hin und her bewegt. Beim Rückzug des Kolbens in das Pumpengehäuse wird überschüssiges Schmiermittel entlang der Leitungen 8 in die Pumpenkammer geführt. Beim Vorbewegen des Kolbens wird das überschüssige Schmiermittel entlang der Leitung 12 in einen Aufnahme- oder Sammelbehälter 13 geführt.

Zur Bewegung des Kolbens 11 des Pumpenelementes 9 wird Öldruck aus einer Zylinderkammer 16 über eine Leitung 17 in eine entsprechende Arbeitsleitung 18 zur Pumpe 9 geführt. Dieser Öldruck wiederum wird in einem Druckmittelwandler durch die Hin- und Herbewegung eines Kolbens 19 gesteuert, der seinerseits auf der dem Ölvolumen abgewandten Seite mit dem Systemdruck des Schmiermittels über die Leitung 15 beaufschlagt wird.

Auf diese Weise wird der Öldruck in den Leitungen 17, 18 zum Pumpenelement 9 geführt, so dass der Kolben 11 eine entsprechende Bewegung zum Ausbringen des Fetts in die Leitung 12 ausführt. Das Ansaugen überschüssigen Fetts über die Leitung 8 erfolgt bei zurückfahrendem Kolben 11 aufgrund der Federkraft.

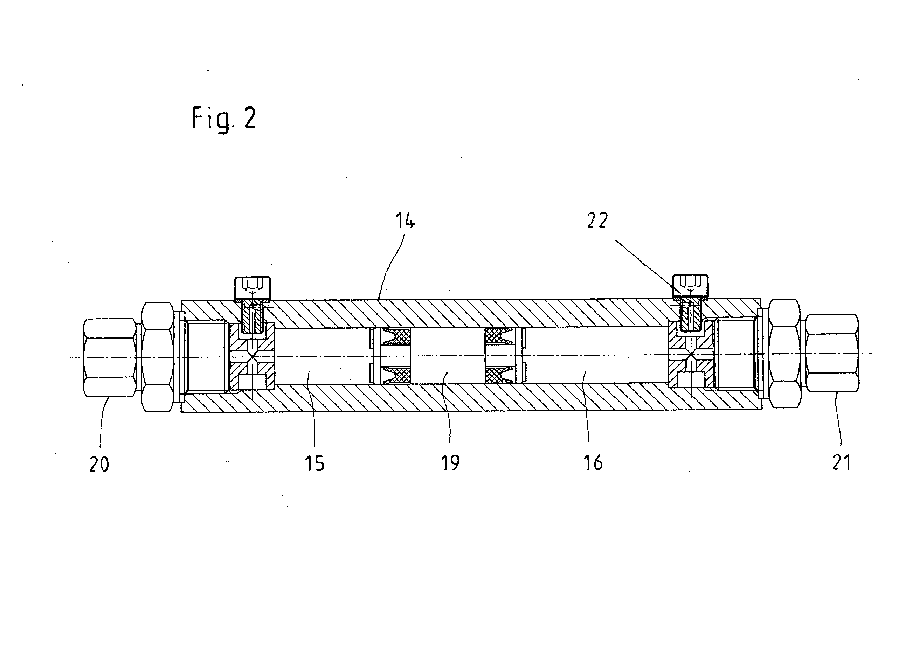

Der Druckmittelwandler 14 ist in Fig. 2 detailliert gezeigt. Er weist die Kammer 15 für das unter Systemdruck geführte Fett auf, wozu ein Anschluss 20 an die Systemleitung vorgesehen ist. Er weist die Kammer für das Öl zum Antrieb der Pumpen auf, wozu ein Anschluss 21 in eine Öldruckleitung führt. Schrauben 22 sind zur Entlüftung, Auffüllung oder einem Nachsaugen an den jeweiligen Anschlussbereichen angeordnet.

Das System funktioniert so, dass bei Aufbringung eines Schmiermitteldruckes in die Leitung 6 über den Abzweig 15 und die Kammer 15 des Druckmittelwandlers der Kolben 19 bewegt wird. Es entsteht Druck in der Ölkammer 16 und damit in den Leitungen 17 und 18 zu den Pumpen 9. Somit bewegt sich der Kolben 11 in den Pumpen so, dass in der Pumpenkammer gesammeltes überschüssiges Fett in die Sammelleitung 12 und den Sammelbehälter 13 geführt wird. Zugleich wird Schmiermittel über die Applikatoren 3 an die Schmierstellen 7 geführt. Lässt der Schmierdruck nach, lässt auch der Öldruck in der Kammer 16 nach. Der federbelastete Kolben 11 eines jeden Pumpenelementes 9 bewegt sich wieder in die andere Richtung. Auf diese Weise wird überschüssiges Schmiermittel über die die Leitungen 8 in die Pumpenkammer gesaugt.

Das Öl fließt über die Leitungen 18 und 17 wieder in die Kammer 16 und drückt den Kolben 19 gegen den abgefallenen Schmiermitteldruck in der Kammer 15 zurück.

Das beschriebene Ausführungsbeispiel dient nur der Erläuterung und ist nicht beschränkend.

### Bezugszeichenliste

- 1: Rückführeinrichtung
- 2: Wellenlager
- 3: Schmierelement
- 4: Schmiermittelquelle
- 5: Ventil
- 6: Schmiermittelleitung
- 7: Schmierstelle
- 8: Schmierstelle
- 9: Pumpenelement
- 10: Feder
- 11: Kolben
- 12: Sammelleitung
- 13: Sammelbehälter
- 14: Druckmittelwandler
- 15: Fettkammer
- 16: Ölkammer
- 17: Ölleitung
- 18: Ölleitung
- 19: Kolben
- 20: Anschluss
- 21: Anschluss
- 22: Entlüftungsschraube

## Patentansprüche

1. Einrichtung zur Rückführung von verbrauchten Schmierstoffen von Verbrauchern zu einer Sammelstelle, wobei einem Verbraucher ein Pumpenelement zur Aufnahme und Weiterleitung von Überschussschmierstoff zugeordnet ist, welches einen gegen die Wirkung einer Rückstellfeder antreibbaren Kolben aufweist, **gekennzeichnet durch**
wenigstens einen Druckmittelwandler, der einen einseitig mit dem Schmierstoffdruck beaufschlagbaren Kolben aufweist, der andererseits einen Öldruck zum Antrieb des Kolbens des Pumpenelementes steuert.

2. Einrichtung nach Anspruch 1, **dadurch gekennzeichnet, dass** der Druckmittelwandler in Form eines Zylinders ausgebildet ist, der an einem Ende an die Schmierstoffversorgungsleitung und am anderen Ende mit einer Öldruckleitung verbunden ist und einen zwischen beiden Anschlüssen liegenden axial beweglichen Kolben aufweist.

3. Einrichtung nach einem der vorhergehenden Ansprüche, **dadurch gekennzeichnet, dass** der Druckmittelwandler an den Anschlussstellen Entlüftungsschrauben aufweist.

4. Einrichtung nach einem der vorhergehenden Ansprüche, **dadurch gekennzeichnet, dass** das Pumpenelement eine Pumpenkammer und einen axial beweglichen Kolben aufweist, welcher bei Öldruckbeaufschlagung Schmierstoff aus der Pumpenkammer in den Sammelbehälter drückt, bei nachlassendem Öldruck Schmierstoff vom Verbraucher in die Pumpenkammer saugt.

5. Einrichtung nach einem der vorhergehenden Ansprüche, **dadurch gekennzeichnet, dass** das Pumpenelement wenigstens ein Sicherheitsventil aufweist.
